# EUROPÄISCHE PATENTANMELDUNG

(11) **EP 1 293 327 A2**
(43) Veröffentlichungstag der Anmeldung: **19.03.2003**
(21) Anmeldenummer: 02450200.7
(22) Anmeldetag: 05.09.2002
(51) Int. Cl.: B29C 47/70

(54) **Adapter für Einen Extruder zur Erzeugung von Kunststoffprofilen**

(30) Priorität: 17.09.2001 AT 2001715 U
(71) Anmelder: Technoplast Kunststofftechnik Gesellschaft m.b.H., 4563 Micheldorf (AT)
(72) Erfinder: Schwaiger, Meinhard Dipl.-Ing., 4040 Linz (AT); Smutka, Franz, 1070 Wien (AT)
(74) Vertreter: Babeluk, Michael, Dipl.-Ing. Mag.

(57) **Zusammenfassung**

Die Erfindung betrifft einen Adapter für einen Extruder zur Erzeugung von Kunststoffprofilen, der dazu vorgesehen ist, zwischen einem Extruderzylinder (2) und einer Extrusionsdüse (20) angeordnet zu sein, wobei ein Grundkörper des Adapters einen Fließkanal (6) aufweist, der an einer Außenseite durch eine Wandfläche des Grundkörpers und an einer Innenseite durch einen fest mit dem Grundkörper verbundenen Umlenkkörper (3) begrenzt ist. Eine schonende Homogenisierung der Schmelze kann dadurch erreicht werden, dass der Umlenkkörper (3) im Wesentlichen kugelförmig ausgebildet ist und ausschließlich von einem stromaufwärtig gelegenen Haltedorn (4) gehalten wird, der über Stege (17) mit dem Adapter (1) verbunden ist.

## Beschreibung

Die Erfindung betrifft einen Adapter für einen Extruder zur Erzeugung von Kunststoffprofilen, gemäß dem Oberbegriff von Patentanspruch 1.

In der Extrusion werden dem Stand der Technik entsprechend aus der Kunststoffschmelze in einem kontinuierlichen Prozess auf einer Extrusionsanlage z.B. Profile erzeugt. Dabei wird in einem Extruder das Ausgangsmaterial (z.B. Pulver, Granulat) plastifiziert und unter Druck in einer Werkzeugdüse zu einem Endprofilstrang geformt, und anschließend mit einem Kalibrierwerkzeug, bestehend aus z.B. Trockenkalibrator und Nasskalibrator abgekühlt und in die gewünschte geometrische Form gebracht, zu einem kalten Endlosprofilstrang ausgeformt. Die zur Kalibrierung erforderliche Kühlleistung und Vakuumenergie wird mit dem das Kalibrierwerkzeug aufnehmenden Kalibriertisch zur Verfügung gestellt.

Durch kontinuierliche Forschungsentwicklung ist es in den letzten Jahren zu einer beachtlichen Steigerung der Extrusionsgeschwindigkeiten gekommen. Dabei waren es vor allem die Kühl- und Kalibrierwerkzeuge, die die mögliche Extrusionsgeschwindigkeit nach oben hin beschränkt haben.

Die Erfinder der vorliegenden Erfindung haben jedoch durch Untersuchungen Indizien dafür gefunden, dass beim derzeitigen Stand der Entwicklung eine wesentliche Beschränkung der Extrusionsgeschwindigkeit beim Extruder selbst vorliegt. Die Erzeugung und Aufbereitung der Kunststoffschmelze erfolgt im Extruderzylinder mittels spezieller Schnecken. In Abhängigkeit von der Extrusionsleistung und dem verarbeiteten Kunststoffmaterial kommen unterschiedliche Schneckenbauarten und -geometrien zum Einsatz. Zur Erzeugung von Profilen aus z.B. PVC kommen überwiegend gegenläufige Doppelschneckenextruder zum Einsatz in konischer Bauart für kleinere bis mittlere Ausstoßleistungen und in paralleler (zylindrischer) Bauart für mittlere bis hohe Ausstoßleistungen. Gerade bei Verwendung von Extrudern in konischer Bauart treten Inhomogenitäten im Schmelzstrom auf, deren Ausmaß bei höheren Ausstoßleistungen zunimmt. Diese Inhomogenitäten wirken sich in der Weise aus, dass vorwiegend die Innenflächen eines Profils, die aus verfahrenstechnischen Gründen nicht kalibriert werden können, Unruhen, Wandstärkeunterschiede, sowie narbige Abzeichnungen auf der Oberfläche aufweisen und diese Unruhen sich auch auf den kalibrierten Außenflächenbereichen abzeichnen können. Damit führt diese optische Beeinträchtigung der innen- bzw. außenliegenden Flächen zu einer Leistungsbegrenzung des Extruders, teilweise weit unterhalb einer technischen Leistungsgrenze.

Üblicherweise ist die Extrusionsdüse mit dem eigentlichen Extrusionszylinder, in dem die Schnecken angeordnet sind, über einen Adapter verbunden. In diesem Adapter wird der Querschnitt des Fließkanals kontinuierlich von der typischen Brillenform am Ausgang des Extrusionszylinders in eine dem Profilumriss angepasste Form umgewandelt. Gleichzeitig erfolgt während der Durchströmung des Adapters eine gewisse Homogenisierung des Materials. Offenbar sind diese Ausgleichsvorgänge jedoch nur bis zu einer bestimmten Extrusionsgeschwindigkeit des Materials möglich, so dass bei einer weiteren Erhöhung Störungen im Extrusionsprozess auftreten.

Grundsätzlich kann eine Verbesserung der Homogenität einer Kunststoffschmelze dadurch erreicht werden, dass der Kunststoffschmelze nach dem Austritt aus dem Extruder und vor dem Eintritt in den Schmelzkanal der Düse ausreichend Zeit eingeräumt wird. Temperaturinhomogenitäten in der Schmelze können sich innerhalb einer bestimmten Zeitspanne auflösen.

Diese Zeitspanne, respektive Verweilzeit, wird aus dem Schmelzedurchsatz und dem Volumen des Strömungskanals im Adapter repräsentiert.

Die geometrisch einfachste Form des Strömungskanals im Adapter ist ein zylindrischer Hohlraum. Durchmesser und Länge des zylindrischen Hohlraums bestimmen das Volumen, und mit dem Schmelzedurchsatz kann die nominelle Verweilzeit bestimmt werden. Nachteilig ist die durch die rheologischen Eigenschaften der Kunststoffschmelzen, z.B. Strukturviskosität, Wandhaften und Wandgleiten, in Abhängigkeit von den auftretenden Schubspannungen im Schmelzestrom bedingte inhomogene Strömungsgeschwindigkeit innerhalb des kreisförmigen Strömungsquerschnittes. Ein Schmelzepartikel im Zentrum des kreisförmigen Strömungsquerschnittes wäre dabei um ein Mehrfaches schneller als die nominelle Strömungsgeschwindigkeit und ein Schmelzepartikel im Bereich des äußeren Strömungsquerschnittes weist eine Strömungsgeschwindigkeit, die einem Bruchteil der nominellen Strömungsgeschwindigkeit entspricht, auf.

Mit einer zylinderförmigen Strömungskanalform kann das Ziel einer Schmelzehomogenisierung sohin nicht erreicht werden. Schmelzepartikel im mittleren Bereich des Strömungskanals sind zu schnell, während Schmelzepartikel im äußeren Bereich des Strömungskanals zu große Verweilzeiten erreichen.

Bei den am häufigsten zur Anwendung kommenden Kunststoffen ist zudem die Verweildauer nach oben begrenzt. Wird die als z. B. Thermostabilität bezeichnete max. zulässige Verweildauer überschritten, kommt es zu einer thermischen Schädigung der Kunststoffschmelze, die sich z.B. in einer Farbveränderung, Ablagerung thermisch zerstörter Partikel bis hin zu einem exothermen Zerfall der Kunststoffschmelze (PVC) äußeren kann. Eine Weiterverarbeitung der Kunststoffschmelze ist in diesem Fall technisch unmöglich. Ein weiterer Nachteil ergibt sich aus der erforderlichen großen Länge des Strömungskanals, die zu einer ungünstigen Verlängerung der Gesamtanlage führen würde.

Eine Verkürzung der Baulänge und eine Reduzierung der Verweilzeitunterschiede sind möglich durch eine Veränderung der Strömungskanalform in der Weise, dass die Schmelze einen Torpedo symmetrisch umströmt. Eine kürzestmögliche Bauart wird erreicht, wenn der Torpedo scheibenförmig ausgebildet wird. Der Schmelzefluss ist in diesem Fall gekennzeichnet von einer annähernd 90° Umlenkung in eine radial nach außen verlaufende stetig abnehmende Strömung, eine 90° Umlenkung in eine Kreisringströmung, eine erneute 90° Umlenkung in eine radial nach innen gerichtete, stetig zunehmende Strömung und eine weitere 90° Umlenkung in eine zylinderförmige Ausströmung, die zu einer zusätzlichen Scherbeanspruchung der Schmelze führen und die nach wie vor deutlich ausgeprägten Verweilzeitunterschiede im Schmelzefluss. Besonders bei Kunststoffschmelzen aus PVC wirken sich zusätzliche Scherbeanspruchungen auf die rheologischen Eigenschaften der Schmelze aus, d.h. die Schmelzeeigenschaften werden verändert, weshalb die Fließeigenschaften der Schmelze in der Werkzeugdüse beeinflusst und die geometrischen Eigenschaften des Extrudats am Austritt aus der Düse verändert sind.

Die DE 32 22 879 A zeigt einen Adapter, der eine Mischscheibe aufweist, die über Stege gehalten ist und die von der Schmelze außen umströmt wird. Die Mischscheibe besitzt einen im Vergleich zu ihrer Länge relativ großen Durchmesser, so dass ein relativ langer Strömungskanal mit einer entsprechenden Verweilzeit gegeben ist. Durch die Umlenkungen des Materials sind große Schergeschwindigkeiten bedingt, was zwar einerseits zu einer guten Vermischung führt, andererseits jedoch die oben beschriebene Unruhen verursacht, die sich nachteilig auf die Profilqualität auswirken. In dieser Druckschrift ist weiters eine Mischscheibe beschrieben, die direkt an der Extruderschnecke angebracht ist und sich somit mit der Schneckendrehzahl dreht. Bei einer solchen Lösung werden die oben beschriebenen Effekte noch verstärkt.

Die DE 658 102 A zeigt eine Strangpresse, die einen Torpedokörper aufweist, der durch seitlich abstehende Rippen gehalten ist. Eine solche Vorrichtung ist bei der Erzeugung von Kunststoffprofilen nicht ohne weiteres verwendbar, da durch die Rippen eine Unterbrechung des Fließweges verursacht wird.

Aufgabe der vorliegenden Erfindung ist es, die Nachteile zu vermeiden und einen Adapter zu schaffen, der eine weitere Steigerung der Extrusionsgeschwindigkeit ermöglicht, ohne die Gefahr von Qualitätsmängeln des erzeugten Kunststoffprofils zu bewirken.

Erfindungsgemäß werden diese Aufgaben durch die Merkmale des Kennzeichens von Patentanspruch 1 gelöst.

Überraschenderweise wird durch diese erfindungsgemäße Maßnahme erreicht, dass trotz guter Homogenisierung eine Beruhigung des Materials erfolgt, die zu einer hervorragenden Profilqualität führt. Wesentlich an der Erfindung ist, dass die stromaufwärts des Umlenkkörpers liegenden Stege keine Beeinträchtigung der Qualität verursachen, da die Umlenkung die entstehenden Störungen beseitigt. Der Umlenkkörper muss dabei nicht exakt die geometrische Form einer Kugel annehmen, wesentlich an der Form ist jedoch eine annähernd gleichmäßige Erstreckung in alle Richtungen und die Vermeidung von Kanten oder Rundungen mit kleinen Radien. Besonders günstig ist es in diesem Zusammenhang, wenn der Umlenkkörper drehsymmetrisch ausgebildet ist und eine axiale Länge aufweist, die zwischen dem 0,8 fachen und dem zweifachen, vorzugsweise zwischen dem 0,9 fachen und dem 1,2 fachen Durchmesser in der Äquatorialebene liegt.

Eine gleichmäßige Dicke des Fließkanals kann erreicht werden, wenn die Wandfläche des Grundkörpers im Wesentlichen kugelförmig und konzentrisch zum Umlenkkörper ausgebildet ist.

Eine leichte Anpassung der Dimensionen des Umlenkkörpers an unterschiedliche Extrusionsgeschwindigkeiten kann in einfacher Weise dadurch erreicht werden, dass der Umlenkkörper lösbar an dem Haltedorn befestigt ist. Dabei kann bei niedrigen Extrusionsgeschwindigkeiten ein größerer Umlenkkörper eingesetzt werden, da die erforderliche Verweilzeit hier geringer ist. Umgekehrt wird man bei höheren Extrusionsgeschwindigkeiten kleinere Umlenkkörper verwenden, um die Verweilzeit zu erhöhen.

Eine besonders einfache Herstellung und Wartung wird dadurch ermöglicht, dass der Grundkörper im Bereich der Äquatorialebene des Umlenkkörpers geteilt ist.

Ein effizientes Temperaturmanagement des extrudierten Materials kann erreicht werden, wenn sowohl erste Heizvorrichtung zur Beheizung der im Fließkanal angeordneten Materialschmelze von außen vorgesehen ist, als auch eine weitere Heizvorrichtung im Umlenkkörper zur Beheizung des Materials von innen her vorgesehen ist. Dadurch können die rheologischen Eigenschaften des Materials positiv beeinflusst werden.

Weiters betrifft die vorliegende Erfindung eine Vorrichtung zur Extrusion von Kunststoffprofilen, bestehend aus einem Extruder mit einem Extrusionszylinder, der mindestens eine, vorzugsweise zwei Schnecken zur Förderung der Kunststoffschmelze enthält, sowie mit einem Adapter und einer daran anschließenden Extrusionsdüse, bei der der Adapter wie oben beschrieben ausgeführt ist.

In der Folge wird die Erfindung anhand der in den Figuren dargestellten Ausführungsvarianten näher erläutert. Es zeigen:
- Fig. 1: einen allgemeinen Aufbau einer Extrusionslinie unter Verwendung eines Adapters entsprechend der vorliegenden Erfindung,
- Fig. 2: einen Längsschnitt durch einen erfindungsgemäßen Adapter,

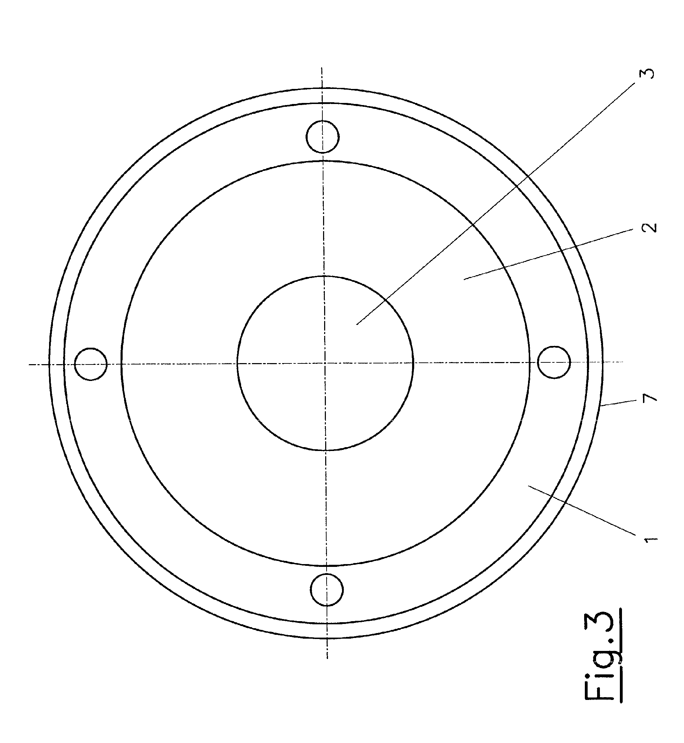

- Fig. 3: einen Schnitt nach Linie III-III in Fig. 2 und
- Fig. 4: ein Diagramm, das die rechnerisch ermittelten Strömungsverhältnisse in einem erfindungsgemäßen Adapter zeigt.

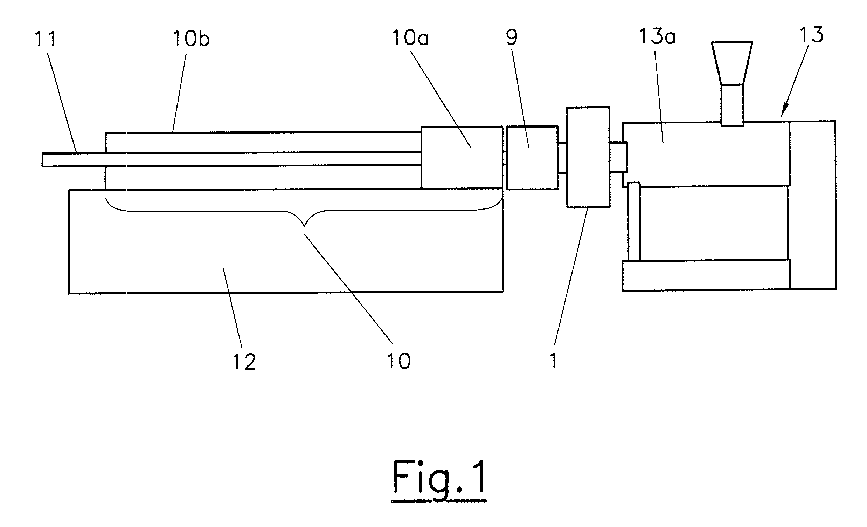

Die Extrusionslinie der Fig. 1 besteht aus einem Extruder 13 mit einem Extruderzylinder 13a, an dem über einen Adapter 1 eine Extrusionsdüse 9 angeschlossen ist. Aus der Extrusionsdüse 9 wird ein Kunststoffprofilstrang 11 beispielsweise für die Herstellung von Fenstern extrudiert. Der in teigigem Zustand befindliche Profilstrang 11 wird in einer Kühl- und Kalibriereinrichtung 10 in an sich bekannter Weise gekühlt und kalibriert, die aus der Trockenkalibrierung 10a und der Nasskalibrierung 10b besteht, die auf einem Kalibriertisch 12 aufgebaut sind. In weiterer Folge sind nicht dargestellte Bauelemente wie Raupenabzug und fliegende Säge angeordnet, um die einzelnen Profilstangen herzustellen.

Der Adapter 9 besteht aus einem Grundkörper 1a, 1b mit einer hohlkugelförmigen Ausnehmung 2, an den Flanschteile 14, 15 anschließen. Im stromaufwärtigen Flanschteil 15 ist ein zylindrischer Zulaufkanal 6 vorgesehen, und im stromabwärtigen Flanschteil 14 ist ein Auslaufkanal 5 angeordnet, der ebenfalls zylindrisch ist. Die kugelförmige Ausnehmung 2 bildet zusammen mit dem Zulaufkanal 6 und dem Auslaufkanal 5 den Strömungskanal für die zu extrudierende Kunststoffschmelze. Der Strömungsverlauf der Kunststoffschmelze ist durch Pfeile 16 angedeutet. Konzentrisch zu der kugelförmigen Ausnehmung 2 im Grundkörper 1a, 1b ist ein kugelförmiger Umlenkkörper 3 angeordnet. Der Umlenkkörper 3 wird durch einen zylindrischen Haltedorn 4 getragen, der im Zulaufkanal 6 über drei Stege 17 gehalten ist. Der Umlenkkörper 3 ist über nicht dargestellte Schrauben lösbar mit dem Haltedorn 4 verbunden.

Der Grundkörper 1a, 1b ist in der Äquatorialebene 18 des Umlenkkörpers 3 geteilt, und die beiden Hälften 1a, 1b werden durch Schrauben 8 zusammengehalten.

Ein Heizband 7 ist außen um den Grundkörper 1a, 1b herumgeführt, um eine übermäßige Abkühlung der zu extrudierenden Schmelze zu vermeiden.

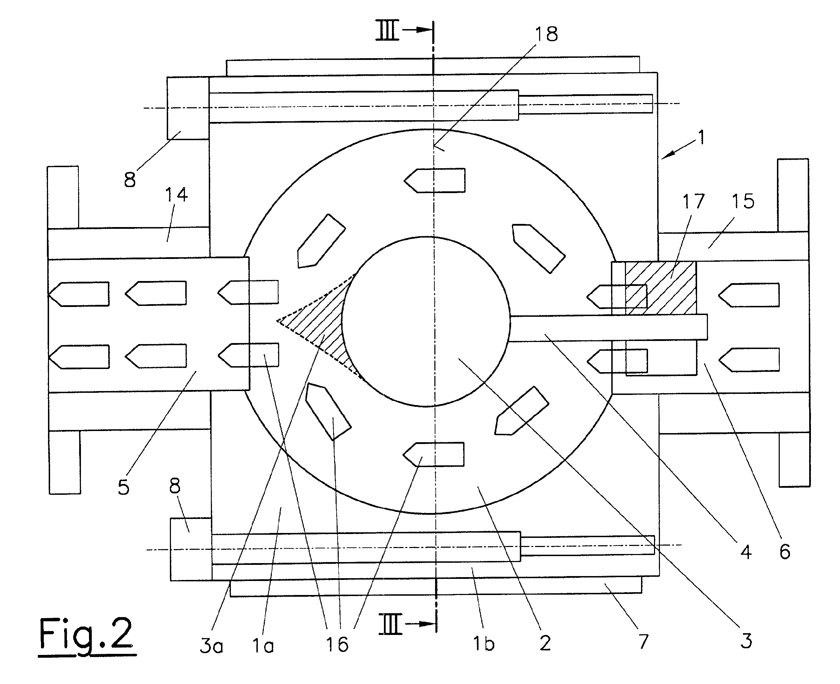

Um eine Strömungsablösung im stromabwärtigen Bereich des kugelförmigen Umlenkkörpers 3 zu vermeiden, kann an der stromabwärtigen Seite ein Fortsatz 3a vorgesehen sein, der in Fig. 2 mit unterbrochenen Linien dargestellt ist.

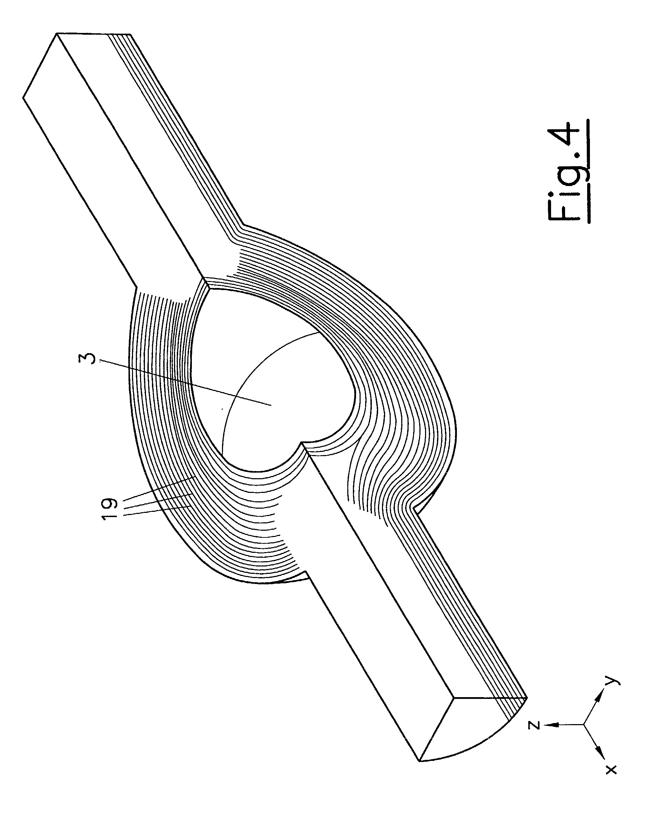

Das Diagramm von Fig. 4 zeigt schematisch die Stromlinien 19 für einen solchen Umlenkkörper 3.

Durch den erfindungsgemäßen Adapter 9 wird erreicht, dass die Kunststoffschmelze umgelenkt wird, so dass eine erhöhte Verweilzeit erreicht wird. Die Umlenkung ist jedoch mit geringen Scherraten verbunden, so dass am Austritt des Adapters 9 ein beruhigter Zustand vorherrscht, der eine hohe Profilqualität ermöglicht.

## Patentansprüche

1. Adapter für einen Extruder zur Erzeugung von Kunststoffprofilen, der dazu vorgesehen ist, zwischen einem Extruderzylinder (13a) und einer Extrusionsdüse (9) angeordnet zu sein, wobei ein Grundkörper (1a, 1b) des Adapters (1) einen Fließkanal (2) aufweist, der an einer Außenseite durch eine Wandfläche des Grundkörpers (1a, 1b) und an einer Innenseite durch einen fest mit dem Grundkörper (1a, 1b) verbundenen Umlenkkörper (3) begrenzt ist, der im Wesentlichen kugelförmig ausgebildet ist, **dadurch gekennzeichnet, dass** der Umlenkkörper (3) ausschließlich von einem stromaufwärtig gelegenen Haltedorn (4) gehalten ist, der über Stege (17) mit dem Adapter (1) verbunden ist.

2. Adapter nach Anspruch 1, **dadurch gekennzeichnet, dass** der Umlenkkörper (3) drehsymmetrisch ausgebildet ist und eine axiale Länge aufweist, die zwischen dem 0,8 fachen und dem zweifachen, vorzugsweise zwischen dem 0,9 fachen und dem 1,2 fachen Durchmesser in der Äquatorialebene (18) liegt.

3. Adapter nach einem der Ansprüche 1 oder 2, **dadurch gekennzeichnet, dass** die Wandfläche des Grundkörpers (1a, 1b) im Wesentlichen kugelförmig und konzentrisch zum Umlenkkörper (3) ausgebildet ist.

4. Adapter nach einem der Ansprüche 1 bis 3, **dadurch gekennzeichnet, dass** der Umlenkkörper (3) lösbar an dem Haltedorn (4) befestigt ist.

5. Adapter nach einem der Ansprüche 1 bis 4, **dadurch gekennzeichnet, dass** der Grundkörper (1a, 1b) im Bereich der Äquatorialebene (18) des Umlenkkörpers (3) geteilt ist.

6. Adapter nach einem der Ansprüche 1 bis 5, **dadurch gekennzeichnet, dass** sowohl erste Heizvorrichtung (13) zur Beheizung der im Fließkanal (2, 5, 6) angeordneten Materialschmelze von außen vorgesehen ist, als auch eine weitere Heizvorrichtung im Umlenkkörper (3) zur Beheizung des Materials von innen her vorgesehen ist.

7. Vorrichtung zur Extrusion von Kunststoffprofilen, bestehend aus einem Extruder mit einem Extrusionszylinder (2), der mindestens eine, vorzugsweise zwei Schnecken zur Förderung der Kunststoffschmelze enthält, sowie mit einem Adapter (1) und einer daran anschließenden Extrusionsdüse (9), **dadurch gekennzeichnet, dass** der Adapter (1) nach einem der Ansprüche 1 bis 6 ausgeführt ist.
